# EUROPEAN PATENT APPLICATION

(11) **EP 4 518 009 A1**
(43) Date of publication of application: **05.03.2025**
(21) Application number: 22968164.8
(22) Date of filing: 14.12.2022
(51) Int. Cl.: H01M 50/552, H01M 50/503

(54) **BATTERY CELL, BATTERY AND ELECTRIC DEVICE**

(71) Applicant: Contemporary Amperex Technology (Hong Kong) Limited, Hong Kong (HK)
(72) Inventor: CHEN, Shengwang, Ningde Fujian 352100 (CN); ZHU, Guanghao, Ningde Fujian 352100 (CN); GUO, Zhijun, Ningde Fujian 352100 (CN); WANG, Peng, Ningde Fujian 352100 (CN)
(74) Representative: Frick, Robert
(86) International application number: PCT/CN2022/139095
(87) International publication number: WO 2024/124454

(57) **Abstract**

The present application discloses a battery cell, a battery, and an electrical apparatus. The battery cell includes a shell, an electrode terminal, and a blocking member. The shell includes a wall portion, the wall portion has a lead-out hole; the electrode terminal includes an insertion portion and a flange portion connected to each other in an axial direction of the electrode terminal, the insertion portion is provided in the lead-out hole, the flange portion is located at the side of the insertion portion away from the inside of the shell, and in a radial direction of the electrode terminal, an outer peripheral surface of the flange portion is at least partially beyond an outer peripheral surface of the insertion portion, and the electrode terminal has a recessed portion arranged in the axial direction; the blocking member is used to block the recessed portion, the blocking member includes a body, the body covers the side of the flange portion away from the insertion portion and is fixedly connected to the flange portion, and the battery cell is electrically connected to the outside through the blocking member. In this way, the connectable region of the blocking member can be increased.

## Description

### TECHNICAL FIELD

The present application relates to the technical field of batteries, and particularly relates to a battery cell, a battery, and an electrical apparatus.

### BACKGROUND

With the development of battery technology, battery cells are used in more and more fields and gradually replace traditional fossil energy in the field of automotive power. Battery cells can store chemical energy and controllably convert chemical energy into electrical energy. For recyclable battery cells, after discharge, the battery cell can be used continually by activating the active substance by charge.

The battery cell often includes an electrode assembly, an electrode terminal, a blocking member, and a shell capable of accommodating the electrode assembly. The electrode assembly is electrically connected to the outside through the electrode terminal. The blocking member blocks the recessed portion of the electrode terminal and is connected to the electrode terminal. The electrode terminal is electrically connected to the outside through the blocking member. In the existing battery cell structure, the connectable region of the blocking member is small, and it is difficult to meet the need for electrical connection with external components after the blocking member is connected to the electrode terminal.

### SUMMARY OF THE INVENTION

In view of the above problems, the present application provides battery cells, batteries and electrical apparatuses, where the connectable region of the blocking member can be increased.

In a first aspect, the present application provides a battery cell, which includes a shell, an electrode terminal, and a blocking member. The shell includes a wall portion, the wall portion has a lead-out hole; the electrode terminal includes an insertion portion and a flange portion connected to each other in an axial direction of the electrode terminal, the insertion portion is provided in the lead-out hole, the flange portion is located at the side of the insertion portion away from the inside of the shell, and in a radial direction of the electrode terminal, an outer peripheral surface of the flange portion is at least partially beyond an outer peripheral surface of the insertion portion, and the electrode terminal has a recessed portion arranged in the axial direction; the blocking member is used to block the recessed portion, the blocking member includes a body, the body covers the side of the flange portion away from the insertion portion and is fixedly connected to the flange portion, and the battery cell is electrically connected to the outside through the blocking member.

In this way, by additionally providing the flange portion on the electrode terminal and arranging the body of the blocking member to cover the side of the flange portion away from the insertion portion, the area of the body perpendicular to the above-mentioned axial direction can be increased, the connectable region of the blocking member can be expanded, which helps to realize the connection of the blocking member with both the electrode terminal and the outside, and improves the connection effect of the blocking member.

In some embodiments, the outer end surface of the body away from the flange portion includes a central region and a weld region arranged around the central region. The central region is configured to be connected to external conductive components, and the weld region is configured to be welded onto the flange portion.

In this way, the welding track when the body and the flange are connected through welding can surround the central region, thereby achieving balanced connection between the body and the flange portion and improving connection stability.

In some embodiments, the weld region is recessed towards the inside of the shell relative to the central region.

In this way, by arranging the weld region to be recessed towards the inside of the shell relative to the central region, the problem that the weld mark protrudes from the central region to affect the connection between the central region and external conductive components can be alleviated.

In some embodiments, the recess depth of the weld region relative to the central region is greater than or equal to 0.1 mm in the axial direction.

**In** this way, by setting the recess depth of the weld region relative to the central region to be greater than or equal to 0.1 mm, the problem that the weld mark protrudes from the central region to affect the connection between the central region and external conductive components can be alleviated.

**In** some embodiments, the radial width of the weld region is greater than or equal to 0.5 mm in the radial direction.

**In** this way, by setting the radial width of the weld region to be greater than or equal to 0.5 mm, sufficient weld area can be provided between the weld region and the flange portion, while at the same time mitigating the spread of the weld pool formed during the welding process to the central region, which allows sufficient connection area between the central region and external conductive components.

In some embodiments, the ratio of the axial thickness of the body in the weld region to the axial thickness of the region of the flange covered by the weld region is greater than or equal to 1/8 and less than or equal to 1.

In this way, the flange portion and the main body can have sufficient connection strength, and at the same time, the adverse effects caused by the flange portion being welded through can be alleviated.

In some embodiments, the maximum radial dimension of the body is less than or equal to the maximum radial dimension of the flange portion.

In this way, the adverse effects caused by the weld pool formed on the body or the weld energy acting on the periphery of the flange portion can be alleviated.

In some embodiments, the blocking member includes a position-limiting convex portion connected to the body along the above-mentioned axial direction, and the position-limiting convex portion is inserted into the recessed portion.

In this way, radial limiting between the body and the flange portion can be achieved by using the fitting between the position-limiting convex portion and the side wall of the recessed portion.

In some embodiments, the recessed portion includes a first hole section located in the insertion portion, the position-limiting convex portion includes a cylindrical portion and a guide portion, one end of the cylindrical portion is connected to the body, the guide portion is connected to the other end of the cylindrical portion, and the guide portion is used to fit with the hole wall of the first hole section and guide the cylindrical portion into the first hole section.

In this way, the cylindrical portion is introduced into the first hole section through the guide portion, which is beneficial to improving the assembly efficiency of the blocking member.

In some embodiments, in the region where the cylindrical portion and the first hole section overlap in the axial direction, the difference between the minimum radial dimension of the first hole section and the maximum radial dimension of the outer peripheral surface of the cylindrical portion is less than or equal to 0.2 mm.

In this way, the position of the blocking member and the electrode terminal is effectively limited in the radial direction through the first hole section and the cylindrical portion, which alleviates the large relative offset or inclination of the blocking member and the electrode terminal in the radial direction, is beneficial to the connection and fixation between the blocking member and the electrode terminal, and is also conducive to the connection and fixation between the blocking member and external conductive components.

In some embodiments, the difference between the maximum radial dimension of the flange portion and the maximum radial dimension of the body is greater than the difference between the minimum radial dimension of the first hole section and the maximum radial dimension of the outer peripheral surface of the cylindrical portion.

In this way, when the blocking member and the electrode terminal are relatively offset in the radial direction, the projection of the body along the above-mentioned axial direction can still be maintained inside the flange portion, which is conducive to the connection and fixation between the blocking member and the electrode terminal, and at the same time conducive to the connection and fixation between the blocking member and external conductive components.

In some embodiments, the overlap length between the minimum radial dimension of the first hole section and the maximum radial dimension of the outer peripheral surface of the cylindrical portion in the axial direction is greater than or equal to 0.2 mm.

In this way, the reliability and stability of the radial position-limiting of the blocking member and the electrode terminal can be improved.

In some embodiments, the recessed portion includes a first hole section and a second hole section, the first hole section is located in the insertion portion, the second hole section is connected to the first hole section at the side of the first hole section away from the inside of the shell, the second hole section is a frustum hole, and the radial dimension of the second hole section gradually decreases in the direction towards the first hole section.

In this way, the second hole section is used to guide the position-limiting convex portion, which is beneficial to improving the assembly efficiency of the blocking member.

In some embodiments, the recessed portion further includes a third hole section. The third hole section is located in the flange portion and is connected between the side of the flange portion away from the insertion portion and the second hole section, and the radial dimension of one end of the third hole section towards the second hole section is greater than the radial dimension of one end of the second hole section towards the third hole section, thereby forming a first annular mesa at the connection between the second hole section and the third hole section.

In this way, the first annular mesa is formed at the connection between the second hole section and the third hole section, which makes it easier to visually capture the recessed portion.

In some embodiments, the blocking member further includes a transition portion connected between the body and the position-limiting convex portion, wherein the transition portion is arranged in a frustum shape, the radial dimension of the outer peripheral surface of the transition portion gradually decreases in the direction from the body to the position-limiting convex portion, the transition portion is inserted into the second hole section and the third hole section, and the difference between the radial dimension of one end of the third hole section towards the body and the radial dimension of one end of the transition portion towards the body is greater than or equal to 0.15 mm.

In this way, the radial positioning effect of the blocking member and the electrode terminal is improved through the fitting between the transition portion and the second hole section, and at the same time the third hole section is used to alleviate the interference of the inner chamfer at the connection between the transition portion and the body with the flange portion, thereby improving the fitting effect between the body and the flange portion.

In some embodiments, the axial hole depth of the third hole section is greater than or equal to 0.1 mm.

In this way, the interference of the inner chamfer at the connection between the transition portion and the body with the flange portion is alleviated, and the fitting effect between the body and the flange portion is improved.

In some embodiments, the first hole section and the third hole section are cylindrical holes, respectively.

In this way, the processing of the first hole section and the second hole section is facilitated, and the processing efficiency of the electrode terminal is improved.

In some embodiments, the flange portion is integrally formed with the insertion portion and is bent relative to the insertion portion, and the radial dimension of one end of the first hole section towards the second hole section is smaller than the radial dimension of one end of the second hole section towards the first hole section, thereby forming a second annular mesa at the connection between the first hole section and the second hole section.

In this way, the bendability of the blocking member at the side of the second annular mesa towards the flange portion is improved, which facilitates the bending and forming of the flange portion relative to the insertion portion.

In some embodiments, the ratio of the radial width of the second annular mesa to the wall thickness of the insertion portion at the side of the second annular mesa away from the flange portion is greater than 0 and less than or equal to 7/8.

**In** this way, the bendability of the blocking member at the side of the second annular mesa towards the flange portion is improved, which facilitates the bending and forming of the flange portion relative to the insertion portion, and at the same time makes sufficient connection strength maintained between the flange portion and the insertion portion and makes the flange portion have sufficient wall thickness.

**In** some embodiments, the ratio of the radial width of the second annular mesa to the wall thickness of the insertion portion at the side of the second annular mesa away from the flange portion is greater than 0 and less than or equal to 1/2.

**In** this way, the bendability of the blocking member at the side of the second annular mesa towards the flange portion is improved, which facilitates the bending and forming of the flange portion relative to the insertion portion, and at the same time makes sufficient connection strength maintained between the flange portion and the insertion portion and makes the flange portion have sufficient wall thickness.

In some embodiments, the wall thickness of the flange portion and/or the insertion portion at the side of the second annular mesa towards the flange portion is smaller than the wall thickness of the insertion portion at the side of the second annular mesa away from the flange portion.

In this way, the bendability of the blocking member at the side of the second annular mesa towards the flange portion is improved, which facilitates the bending and forming of the flange portion relative to the insertion portion.

In some embodiments, the radial dimension of one end of the first hole section towards the second hole section is smaller than the radial dimension of one end of the second hole section towards the first hole section, thereby forming a second annular mesa at the connection between the first hole section and the second hole section; the blocking member further includes a transition portion connected between the body and the position-limiting convex portion, the radial dimension of one end of the transition portion towards the position-limiting convex portion is greater than the radial dimension of one end of the position-limiting convex portion towards the transition portion, thereby forming a third annular mesa at the connection between the transition portion and the position-limiting convex portion, and the third annular mesa and the second annular mesa are arranged oppositely and spaced apart from each other in the axial direction.

In this way, by providing the third annular mesa and the second annular mesa and arranging them to be spaced apart from each other in the axial direction, interference between the blocking member and the electrode terminal during the assembly process can be alleviated, which is beneficial to improving assembly efficiency.

In some embodiments, the position-limiting convex portion includes a cylindrical portion, an avoidance hole is provided at the side of the position-limiting convex portion towards the inside of the shell, the avoidance hole extends into the cylindrical portion in the axial direction, and the ratio of the wall thickness of the cylindrical portion at the avoidance hole to the axial hole depth of the avoidance hole is greater than or equal to 1/2 and less than or equal to 3.

In this way, the position-limiting convex portion can have sufficient mechanical strength at the hole wall of the avoidance hole, thereby improving the position-limiting effect of the position-limiting convex portion.

In some embodiments, the recessed portion is used to inject the electrolyte into the inside of the shell.

In this way, after the electrode terminal and the shell are assembled and connected, the electrolyte is injected using the recessed portion, and then it is blocked using the blocking member, which can simplify the structural complexity of the battery cell and improve the assembly efficiency of the battery cell.

In some embodiments, the electrode terminal is further provided with a liquid injection hole, which is provided at the bottom of the recessed portion and communicates the inside of the shell with the recessed portion.

In this way, by arranging the liquid injection hole in the thinner region at the bottom of the recessed portion, the formation of the liquid injection hole and the injection of the electrolyte are facilitated.

In some embodiments, the battery cell further includes a current collector and an electrode assembly arranged inside the shell. The current collector is configured to connect the tabs of the electrode assembly and the electrode terminals, and the bottom wall of the recessed portion is welded to the current collector.

In this way, the thin thickness of the bottom of the recessed portion is utilized for welding with the current collector, thereby facilitating the electrical connection between the electrode terminal and the current collector from the side of the electrode terminal away from the current collector.

In some embodiments, the shell includes a case and an end cover, one end of the case has an opening, the end cover covers the opening, the case includes side walls and a bottom wall, the side walls surround the outside of the electrode assembly, the bottom wall is arranged opposite to the opening, and the wall portion is the end cover or the bottom wall.

In some embodiments, by arranging the electrode terminals and blocking members on the end cover or the bottom wall, the assembly efficiency of the battery cells can be improved.

In a second aspect, the present application provides a battery, including the above-mentioned battery cell.

In a third aspect, the present application provides an electrical apparatus including the above-mentioned battery.

### DESCRIPTION OF DRAWINGS

By reading the detailed description of the preferred embodiments below, various other advantages and benefits will become apparent to those of ordinary skill in the art. The drawings are for the purpose of illustrating the preferred implementations only and are not to be considered a limitation to the present application. Moreover, in all of the drawings, the same components are indicated by the same reference numerals. In the drawings:
Fig. 1 is a schematic structural diagram of a vehicle according to some embodiments of the present application;
Fig. 2 is an exploded schematic structural diagram of a battery according to some embodiments of the present application;
Fig. 3 is a schematic cross-section diagram of a battery cell according to some embodiments of the present application;
Fig. 4 is a partial schematic diagram of the battery cell shown in Fig. 3 with some parts hidden;
Fig. 5 is a partial schematic diagram of the battery cell shown in Fig. 3;
Fig. 6 is a schematic structural diagram of the blocking member shown in Fig. 3;
Fig. 7 is a schematic structural diagram of part A of the battery cell as shown in Fig. 4;
Fig. 8 is a schematic structural diagram of part C of the battery cell as shown in Fig. 4;
Fig. 9 is a schematic structural diagram of part B of the battery cell as shown in Fig. 8.

Reference numerals in Detailed Description are as follows:
1000a vehicle;
100a battery; 200a controller; 300a motor;
10a box body; 11a first part; 12a second part;
1 battery cell; 100 shell; 101 wall portion; 102 lead-out hole; 110 case; 111 opening; 112 side wall; 113 bottom wall; 120 end cover; 130 sealing component; 131 sealing groove; 200 electrode terminal; 210 insertion portion; 220 flange portion; 230 recessed portion; 231 first hole section; 232 second hole section; 233 third hole section; 234 first annular mesa; 235 second annular mesa; 240 liquid injection hole; 250 position-limiting flange; 300 blocking member; 310 body; 311 central region; 312 weld region; 313 weld mark; 320 position-limiting convex portion; 321 cylindrical portion; 322 guide portion; 323 avoidance hole; 330 transition portion; 331 internal chamfer; 340 third annular mesa; 400 current collector; 500 electrode assembly; 501 tab; 600 sealing plug; 601 sealing portion; 602 position-limiting portion;
the recess depth T1 of the weld region relative to the central region; the axial thickness T2 of the body in the weld region; the axial thickness T3 of the region of the flange portion covered by the weld region; the wall thickness T4 of the insertion portion at the side of the second annular mesa away from the flange portion; the wall thickness L1 of the flange portion and/or the insertion portion at the side of the second annular mesa towards the flange portion; the radial width T5 of the weld region; the overlap length H1 between the minimum radial dimension of the first hole section and the maximum radial dimension of the outer peripheral surface of the cylindrical portion in the axial direction; the axial hole depth H4 of the third hole section; the radial width L4 of the second annular mesa; the wall thickness L2 of the cylindrical portion at the avoidance hole; the axial hole depth H3 of the avoidance hole; the minimum radial dimension D1 of the first hole section; the radial dimension D1a of one end of the first hole section towards the second hole section; the maximum radial dimension D2 of the outer peripheral surface of the cylindrical portion; the radial dimension D3 of the outer peripheral surface of the transition portion; the radial dimension D3a of one end of the transition portion towards the body; the radial dimension D3b of one end of the transition portion towards the position-limiting convex portion; the radial dimension D4a of one end of the third hole section towards the body; the radial dimension D4b of one end of the third hole section towards the second hole section; the maximum radial dimension D5 of the body; the maximum radial dimension D6 of the flange portion; the radial dimension D9 of the second hole section; the radial dimension D9a of one end of the second hole section towards the third hole section; the radial dimension D9b of one end of the second hole section towards the first hole section; and the radial dimension D10 of one end of the position-limiting convex portion towards the transition portion.

### DETAILED DESCRIPTION

Embodiments of the technical solutions of the present application will be described in detail below with reference to the drawings. The following embodiments are only used to more clearly illustrate the technical solution of the present application, and therefore are only used as examples and cannot be used to limit the scope of protection of the present application.

Unless otherwise defined, all technical and scientific terms used herein have the same meaning as commonly understood by those skilled in the art belonging to the technical field of the present application; the terms used herein are intended only for the purpose of describing specific embodiments and are not intended to limit the present application; the terms "including" and "having" and any variations thereof in the specification and the claims of the present application and in the description of drawings above are intended to cover non-exclusive inclusion.

**In** the description of the embodiments of the present application, the technical terms "first", "second", and the like are used only to distinguish between different objects, and are not to be understood as indicating or implying a relative importance or implicitly specifying the quantity, particular order, or primary and secondary relation of the technical features indicated. **In** the description of the embodiments of the present application, the meaning of "a plurality of" is two or more, unless otherwise explicitly and specifically defined.

Reference herein to an "embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is simply a description of an association of associated objects, which indicates that there may exist three relationships, for example, A and/or B may represent three situations: A exists alone, both A and B exist, and B exists alone. In addition, the character "/" herein generally means that the associated objects before and after it are in an "or" relationship.

In the description of the embodiments of the present application, the term "a plurality of" refers to two or more (including two), and similarly, "a plurality of groups" refers to two or more (including two) groups, and "a plurality of sheets" refers to two or more (including two) sheets.

In the descriptions of the embodiments of present application, orientations or positional relationships indicated by the technical terms "center", "longitudinal", "transverse", "length", "width", "thickness", "upper", "lower", "front", "rear", "left", "right", "vertical", "horizontal", "top", "bottom", "inner", "outer", "clockwise", "anticlockwise", "axial", "radial", "peripheral" and the like are orientations or positional relationships as shown in the drawings, and are only for the purpose of facilitating and simplifying the descriptions of the embodiments of the present application instead of indicating or implying that devices or elements indicated must have particular orientations, and be constructed and operated in the particular orientations, so that these terms are not construed as limiting the embodiments of the present application.

In the description of the embodiments of the present application, unless otherwise expressly specified and defined, the technical terms "mount," "join," "connect," "fix," and the like should be understood in a broad sense, such as, a fixed connection, a detachable connection, or an integral connection; a mechanical connection, or an electrical connection; a direct connection, an indirect connection through an intermediate medium, internal communication between two elements, or interaction between two elements. Those of ordinary skill in the art can understand the specific meanings of the above terms in the embodiments of the present application according to specific situations.

With the development of battery technology, battery cells are used in more and more fields and gradually replace traditional fossil energy in the field of automotive power. Battery cells can store chemical energy and controllably convert chemical energy into electrical energy. For recyclable battery cells, after discharge, the battery cell can be used continually by activating the active substance by charge.

The battery cell often includes an electrode assembly, an electrode terminal, a blocking member, and a shell capable of accommodating the electrode assembly. The electrode assembly is electrically connected to the outside through the electrode terminal. The blocking member blocks the recessed portion of the electrode terminal and is connected to the electrode terminal. The electrode terminal is electrically connected to the outside through the blocking member. In the existing battery cell structure, the connectable region of the blocking member is small, and it is difficult to meet the need for electrical connection with external components after the blocking member is connected to the electrode terminal, and it is not conductive to the connection effect of the blocking member.

In order to improve the connection effect of the blocking member, the applicant found that the battery cell includes a shell, an electrode terminal and a blocking member. The shell includes a wall portion with a lead-out hole. The electrode terminal includes an insertion portion and a flange portion connected to each other in the axial direction of the electrode terminal, the insertion portion is provided in the lead-out hole, the flange portion is located at the side of the insertion portion away from the inside of the shell, and in the radial direction of the electrode terminal, the outer peripheral surface of the flange portion is at least partially beyond the outer peripheral surface of the insertion portion, and the electrode terminal has a recessed portion provided in the axial direction. The blocking member is used to block the recessed portion. The blocking member includes a body. The body covers the side of the flange portion away from the insertion portion and is fixedly connected to the flange portion. The battery cell is electrically connected to the outside through the blocking member. By additionally providing the flange portion on the electrode terminal and arranging the body of the blocking member to cover the side of the flange portion away from the insertion portion, the area of the body perpendicular to the above-mentioned axial direction can be increased, the connectable region of the blocking member can be expanded, which helps to realize the connection of the blocking member with both the electrode terminal and the outside, and improves the connection effect of the blocking member.

The battery cell, battery and electrical apparatus disclosed in the embodiments of the present application can be used in electrical apparatuses that use batteries as power sources or in various energy storage systems that use batteries as energy storage elements. The electrical apparatus can be, but is not limited to, a mobile phone, a tablet, a laptop, an electric toy, an electric tool, a battery vehicle, an electric vehicle, a ship, a spacecraft, and so on. The electric toy may include fixed or mobile electric toys, such as game consoles, electric vehicle toys, electric ship toys, and electric airplane toys. The spacecraft may include airplanes, rockets, space shuttles, spaceships, etc.

For the convenience of description in the following embodiments, an electrical apparatus being a vehicle 1000a according to an embodiment of the present application is taken as an example for the description.

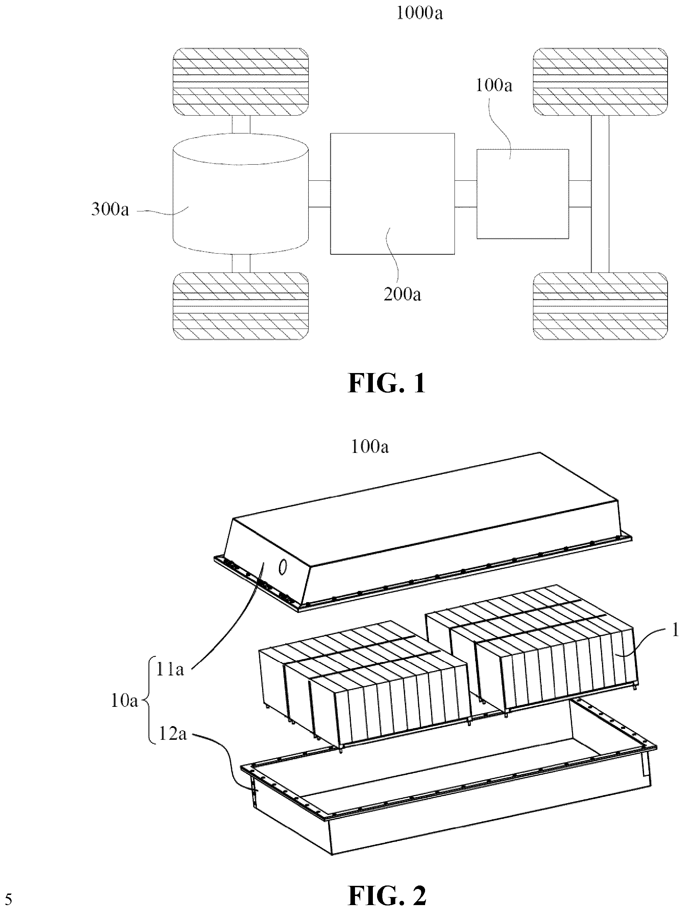

Referring to Fig. 1, the vehicle 1000a may be a fuel vehicle, a gas vehicle, or a new energy vehicle. The new energy vehicle may be a battery electric vehicle, a hybrid electric vehicle, an extended-range vehicle etc. The vehicle 1000a is internally provided with a battery 100a, and the battery 100a may be arranged at a bottom or head or tail of the vehicle 1000a. The battery 100a may be used to supply power to the vehicle 1000a. For example, the battery 100a may be used as an operating power source of the vehicle 1000a. The vehicle 1000a may further include a controller 200a and a motor 300a. The controller 200a is used to control the battery 100a to power the motor 300a, for example, to meet working power demands during starting, navigation and driving of the vehicle 1000a.

In some embodiments of the present application, the battery 100a not only may serve as an operating power source of the vehicle 1000a, but also may serve as a driving power source of the vehicle 1000a, thus replacing or partially replacing fuel or natural gas to provide driving power for the vehicle 1000a.

Referring to Fig. 2, the battery 100a includes a box body 10a and a battery cell 1, and the battery cell 1 is accommodated within the box body 10a. The box body 10a is used for providing an accommodating space for the battery cell 1, and the box body 10a may adopt various structures. In some embodiments, the box body 10a may include a first part 11a and a second part 12a. The first part 11a and the second part 12a are covered by each other, and the first part 11a and the second part 12a together define the accommodating space for accommodating the battery cell 1. The second part 12a may be of a hollow structure with one end open, the first part 11a may be of a plate-like structure, and the first part 11a covers the opening side of the second part 12a, so that the first part 11a and the second part 12a together define the accommodating space. Each of the first part 11a and the second part 12a may also be of a hollow structure with one side open, and the opening side of the first part 11a covers the opening side of the second part 12a. Of course, the box body 10a formed by the first part 11a and the second part 12a may be in various shapes, such as a cylinder or a cuboid.

In the battery 100a, there may be a plurality of battery cells 1, and the plurality of battery cells 1 may be connected in series or parallel or series-parallel connection. The series-parallel connection means that some of the plurality of battery cells 1 are connected in series and some are connected in parallel. The plurality of battery cells 1 may be directly connected in series, or in parallel or in the parallel-series connection, and then the plurality of battery cells 1 are assembled as a whole to be accommodated in the box body 10a; and of course, the battery 100a may also be a whole formed in the manner that the plurality of battery cells 1 are connected in series, or in parallel or in the parallel-series connection to form battery modules, and the plurality of battery modules are then connected in series, or in parallel or in the parallel-series connection, and is accommodated in the box body 10a. The battery 100a may further include other structures. For example, the battery 100a may further include a convergence component for electrically connecting the plurality of battery cells 1.

Each battery cell 1 may be a secondary battery or a primary battery; and may also be a lithium-sulfur battery, a sodium-ion battery, or a magnesium-ion battery, but is not limited thereto. The battery cell 1 may be in a cylindrical, bluff body or cuboid shape, or in other shapes, or the like.

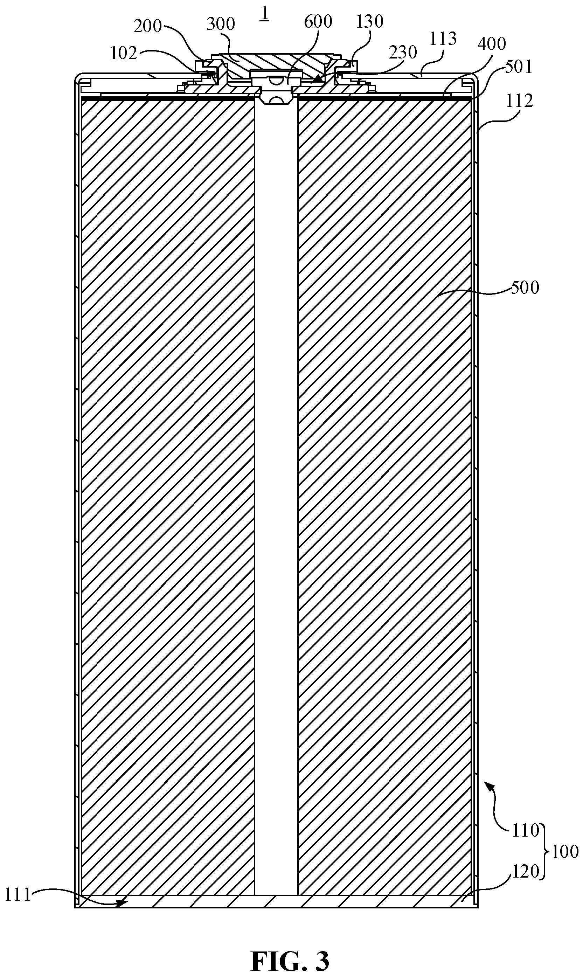

Referring to Fig. 3, the battery cell 1 refers to the smallest unit constituting a battery. In this embodiment, a cylindrical battery cell is taken as an example for description. As shown in Fig. 3, the battery cell 1 includes a shell 100, a battery cell assembly 500 and other functional components.

The shell 100 includes an end cover 120 and a case 110. The end cover 120 is a component that covers an opening of the case 110 to isolate the internal environment of the battery cell 1 from the external environment. Without limitation, the shape of the end cover 120 may be adaptive to the shape of the case 110 so as to be matched with the case 110. Optionally, the end cover 120 may be made of a material (e.g., an aluminum alloy) with a certain hardness and strength, accordingly, the end cover 120 is not easily deformed when being subjected to extrusion and collisions, such that the battery cell 1 can have higher structural strength, and the safety performance can also be improved. Functional components such as electrode terminals 200 may be arranged on the end cover 120. The electrode terminal 200 can be used for being electrically connected to the electrode assembly 500 for outputting or inputting electric energy of the battery cell 1. In some embodiments, the end cover 120 may be further provided with a pressure relief mechanism used for relieving internal pressure when the internal pressure or temperature of the battery cell 1 reaches a threshold. The end cover 120 may be made of various materials, such as copper, iron, aluminum, stainless steel, an aluminum alloy, and plastic, which is not particularly limited in this embodiment of the present application. In some embodiments, an insulating member may be further arranged on an inner side of the end cover 120 and may be used for isolating an electrical connection component in the case 110 from the end cover 120, thereby reducing the risk of short circuit. Exemplarily, the insulating member may be made of plastic, rubber, etc.

The case 110 is an assembly used to be matched with the end cover 120 to form the internal environment of the battery cell 1, where the formed internal environment can be used to accommodate the electrode assembly 500, an electrolyte and other components. The case 110 and the end cover 120 may be separate components, an opening 111 may be formed in the case 110, and at the opening 111, the opening 111 is covered with the end cover 120 so as to form the internal environment of the battery cell 1. Without limitation, the end cover 120 and the case 110 may also be integrated. Specifically, the end cover 120 and the case 110 may form a common connection surface before other components enter the case. When the interior of the case 110 is required to be encapsulated, the case 110 is covered with the end cover 120. The case 110 may be of various shapes and sizes, such as a cuboid, a cylinder, and a hexagonal prism. Specifically, the shape of the case 110 may be determined according to the specific shape and size of the electrode assembly 500. The case 110 may be made of various materials, such as copper, iron, aluminum, stainless steel, an aluminum alloy, and plastic, which is not particularly limited in this embodiment of the present application.

The electrode assembly 500 is a component of a battery cell 1 where an electrochemical reaction occurs. One or more electrode assemblies 500 may be contained within the case 110. The electrode assembly 500 is mainly formed by winding or stacking a positive electrode plate and a negative electrode plate, and a separator is usually arranged between the positive electrode plate and the negative electrode plate. The portions, with active materials, of the positive electrode plate and the negative electrode plate constitute a main body part of the electrode assembly, and the portions of the positive electrode plate and the negative electrode plate without the active materials respectively constitute tabs 501. The tabs 501 include a positive tab and a negative tab. The positive tab and the negative tab may be located at one end of the main body part together or at two ends of the main body part, respectively. **In** the charging and discharging process of the battery 100a, the positive electrode active material and the negative electrode active material react with the electrolyte, and the tabs 501 are connected to the electrode terminals to form a current loop.

According to some embodiments of the present application, as shown in Figs. 3 to 6, the battery cell 1 described in the embodiment of the battery cell 1 of the present application includes a shell 100, an electrode terminal 200 and a blocking member 300. The shell 100 includes a wall portion 101, and the wall portion 101 has a lead-out hole 102. The electrode terminal 200 includes an insertion portion 210 and a flange portion 220 connected to each other in the axial direction of the electrode terminal 200, the insertion portion 210 is provided in the lead-out hole 102, the flange portion 220 is located at the side of the insertion portion 210 away from the inside of the shell 100, and in the radial direction of the electrode terminal 200, the outer peripheral surface of the flange portion 220 is at least partially beyond the outer peripheral surface of the insertion portion 210, and the electrode terminal 200 has a recessed portion 230 provided in the axial direction. The blocking member 300 is used to block the recessed portion 230. The blocking member 300 includes a body 310. The body 310 covers the side of the flange portion 220 away from the insertion portion 210 and is fixedly connected to the flange portion 220. The battery cell 1 is electrically connected to the outside through the blocking member 300.

One end of the electrode terminal 200 is disposed towards the inside of the shell 100 and can be used to electrically connect the electrode assembly 500 disposed in the shell 100. The other end of the electrode terminal 200 is disposed towards the outside of the shell 100 and can be connected to the outside by being connected to the blocking member 300 to realize charging and discharging of the electrode assembly 500. By providing the insertion portion 210 in the lead-out hole 102, the electrode terminal 200 can be mounted on the shell 100.

**In** the present application, the axial direction of the electrode terminal 200 refers to the spacing direction between one end and the other end of the electrode terminal 200, and the radial direction of the electrode terminal 200 refers to the direction perpendicular to the axial direction of the electrode terminal 200.

In the radial direction of the electrode terminal 200, the outer peripheral surface of the flange portion 220 is at least partially beyond the outer peripheral surface of the insertion portion 210, which means that when the outer peripheral surface of the flange portion 220 is projected towards the insertion portion 210 along the above-mentioned axial direction, the outer peripheral surface of the flange portion 220 is at least partially located outside the outer peripheral surface of the insertion portion 210. That is, the radial dimension of at least part of the outer peripheral surface of the flange portion 220 is larger than the radial dimension of the outer peripheral surface of the insertion portion 210.

Through the above arrangement, on the one hand, the flange portion 220 and the wall portion 101 can be overlapped at the periphery of the lead-out hole 102 to facilitate the seal connection between the electrode terminal 200 and the wall portion 101, and on the other hand, the flange portion 220 and the body 310 can be overlapped to facilitate the fixed connection between the electrode terminal 200 and the blocking member 300.

The recessed portion 230 can be communicated with the inside of the shell 100. The blocking member 300 is used to block the recessed portion 230, and the blocking member 300 can be used to alleviate the leakage of the electrolyte inside the battery cell 1. The fixed connection between the body 310 and the flange portion 220 enables the fixed connection between the blocking member 300 and the electrode terminal 200 and the formation of a current path between the electrode assembly 500, the electrode terminal 200 and the blocking member 300.

The blocking member 300 can be connected to the outside through the body 310. By additionally providing the flange portion 220 on the electrode terminal 200 and arranging the body 310 of the blocking member 300 to cover the side of the flange portion 220 away from the insertion portion 210, the area of the body 310 perpendicular to the above-mentioned axial direction can be increased, the connectable region of the blocking member 300 can be expanded, which helps the blocking member 300 realize connection with both the electrode terminal 200 and the outside, and improves the connection effect of the blocking member 300.

Optionally, the blocking member 300 is an aluminum nail, and the electrode terminal 200 is a copper riveted structure.

Optionally, the electrode terminal 200 may include a position-limiting flange 250, and the position-limiting flange 250 is located inside the shell 100 to ease the separation of the electrode terminal 200 from the shell 100.

Optionally, when the insertion portion 210 is disposed in the lead-out hole 102, there is a gap between the insertion portion 210 and the lead-out hole 102, the shell 100 may include a sealing component 130, and the sealing component 130 may be disposed in the gap to fill the gap, and alleviate electrolyte leakage from the gap.

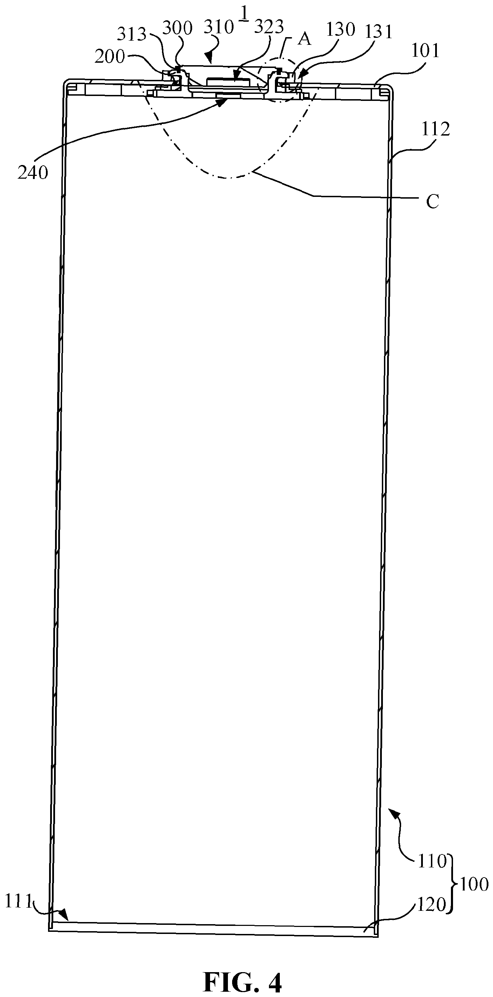

Further, as shown in Fig. 4, the sealing component 130 is annular. The sealing component 130 is sleeved on the periphery of the insertion portion 210 and abuts against the insertion portion 210 and the flange portion 220. A sealing groove 131 is formed outside of the sealing component 130, and the wall portion 101 is partially embedded in the sealing groove 131 to form a seal with the sealing component 130. The sealing component 130 may be an elastic polymer material such as a silicone gasket or a rubber gasket.

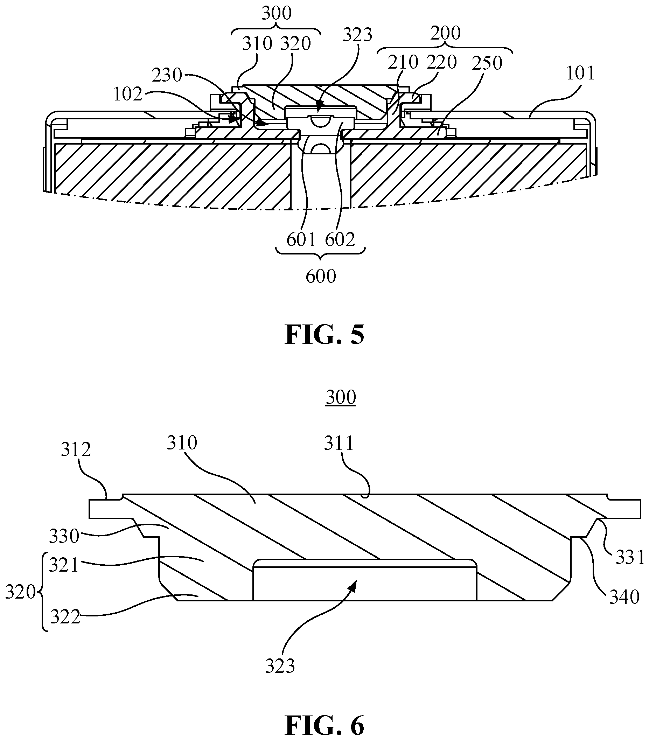

According to some embodiments of the present application, as shown in Fig. 6, optionally, the outer end surface of the body 310 away from the flange portion 220 includes a central region 311 and a weld region 312 arranged around the central region 311. The central region 311 is configured to be connected to external conductive components, and the weld region 312 is configured to be welded onto the flange portion 220.

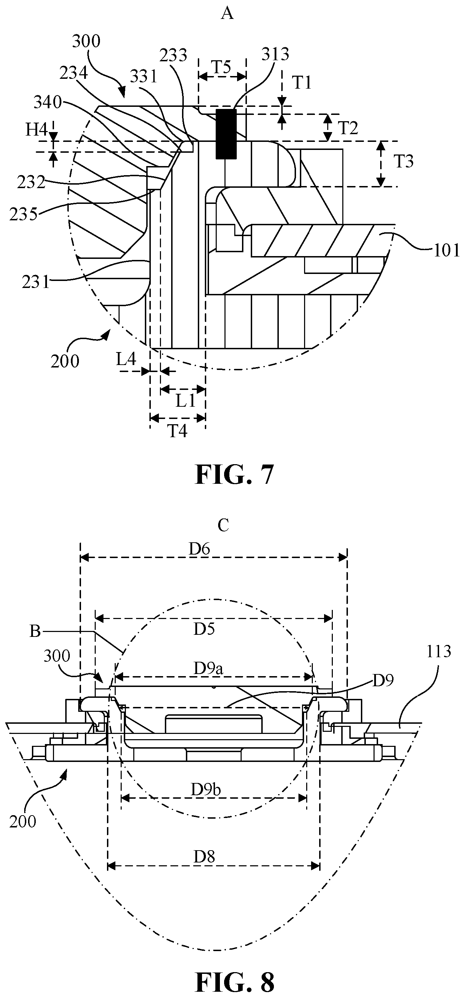

The weld region 312 is arranged around the central region 311. Correspondingly, the welding track when the body 310 and the flange portion 220 are welded and connected can surround the central region 311, thereby forming a weld mark 313 located in the weld region 312 and surrounding the central region 311, so that the body 310 and the flange portion 220 are connected in a balanced manner to improve connection stability. The welding process may be performed from the outer end surface side of the body 310 away from the flange portion 220. Correspondingly, the weld pool may be formed from the outer end surface side of the body 310 away from the flange portion 220, and may penetrate the body 310 and further extend into the flange portion 220. After the weld pool is cooled and solidified, the weld mark 313 (as shown in Fig. 7) is formed, thereby connecting the flange portion 220 and the body 310.

According to some embodiments of the present application, optionally, as shown in Figs. 4 to 7, the weld region 312 is recessed towards the inside of the shell 100 relative to the central region 311.

After the weld mark 313 is formed, it may protrude from the surface of the material before welding. Specifically, the weld mark 313 may protrude from the surface of the weld region 312 before welding. By arranging the weld region 312 to be recessed towards the inside of the shell 100 relative to the central region 311, the problem that the weld mark 313 protrudes from the central region 311 to affect the connection between the central region 311 and external conductive components can be alleviated.

According to some embodiments of the present application, optionally, as shown in Figs. 4 to 7, in the axial direction, the recess depth T1 of the weld region 312 relative to the central region 311 is greater than or equal to 0.1 mm. For example, T1 can be set to be 0.15 mm, 0.2 mm, 0.3 mm, 0.5 mm, 0.8 mm, 1 mm, etc.

By setting the recess depth T1 of the weld region 312 relative to the central region 311 to be greater than or equal to 0.1 mm, the problem that the weld mark 313 protrudes from the central region 311 to affect the connection between the central region 311 and external conductive components can be alleviated.

Optionally, T1 can be set to be less than or equal to 0.8 mm. Further optionally, T1 can be set to be less than or equal to 0.5 mm. By setting the upper limit of T1, the main body 310 and the flange portion 220 can have sufficient connection strength.

According to some embodiments of the present application, optionally, as shown in Figs. 4 to 7, in the radial direction, the radial width T5 of the weld region 312 is greater than or equal to 0.5 mm. For example, T5 can be set to be 0.6 mm, 0.7 mm, 0.8 mm, 1 mm, 1.5 mm, 2 mm, etc.

By setting the radial width T5 of the weld region 312 to be greater than or equal to 0.5 mm in the radial direction, sufficient weld area can be provided between the weld region 312 and the flange portion 220 to alleviate the spreading of the weld pool formed during the welding process from the weld region 312 to the central region 311 in the radial direction.

Optionally, T5 can be set to be less than or equal to 2 mm. Further, T5 can be set to be less than or equal to 1 mm. By setting the upper limit of T5, sufficient connection area can be provided between the central region 311 and external conductive components.

According to some embodiments of the present application, optionally, as shown in Figs. 5 to 7, the ratio of the axial thickness T2 of the body 310 at the weld region 312 and the axial thickness T3 of the region of the flange portion 220 covered by the weld region 312 is greater than or equal to 1/8 and less than or equal to 1. For example, T2/T3 can be set to be 1/5, 1/4, 1/3, 1/2, etc. Further optionally, T2/T3 may be set to be greater than or equal to 1/4 and less than or equal to 7/8.

By setting the ratio of the axial thickness T2 of the body 310 at the weld region 312 to the axial thickness T3 of the region of the flange portion 220 covered by the weld region 312 to be greater than or equal to 1/8, the flange portion 220 and the body 310 can have sufficient connection strength after welding.

By setting the ratio of the axial thickness T2 of the body 310 at the weld region 312 to the axial thickness T3 of the region of the flange portion 220 covered by the weld region 312 to be less than or equal to 1, during the welding process, the weld pool can penetrate the body 310 more easily and can be stopped in time when further extending into the flange portion 220, which is beneficial to the control of the welding process and alleviates the adverse effects caused by the flange portion 220 being welded through. If the flange portion 220 is welded through, the sealing component 130 may be damaged by high temperature, affecting the sealing performance, or the flange portion 220 and the wall portion 101 may be mistakenly welded, causing a short circuit or the like.

According to some embodiments of the present application, optionally, as shown in Figs. 5 to 8, the maximum radial dimension D5 of the body 310 is less than or equal to the maximum radial dimension D6 of the flange portion 220.

By setting the maximum radial dimension D5 of the body 310 to be less than or equal to the maximum radial dimension D6 of the flange portion 220, the adverse effects caused by the weld pool formed on the body 310 or weld energy acting on the periphery of the flange portion 220 during the welding process can be alleviated, which is beneficial to maintaining the weld effect and improving weld safety. The weld pool formed on the body 310 or the weld energy acting on the periphery of the flange portion 220 will also cause the damage of the sealing component 130 by high temperature, affecting the sealing performance, or the flange portion 220 and the wall portion 101 may be mistakenly welded, causing a short circuit or the like.

Optionally, D5/D6 may be set to be greater than or equal to 3/4 and less than or equal to 7/8. By setting D5/D6 within the above numerical range, in addition to mitigating the adverse effects of the weld pool formed on the body 310 or the weld energy acting on the periphery of the flange portion 220, the body 310 can also be made to have sufficient connectable area.

According to some embodiments of the present application, optionally, as shown in Figs. 3-5, the blocking member 300 includes a position-limiting convex portion 320 connected to the body 310 in the axial direction, and the position-limiting convex portion 320 is inserted into the recessed portion 230.

By providing the position-limiting convex portion 320 and inserting the position-limiting convex portion 320 into the recessed portion 230, the position of the electrode terminal 200 and the blocking member 300 can be limited in the radial direction.

According to some embodiments of the present application, optionally, as shown in Figs. 5 to 7, the recessed portion 230 includes a first hole section 231 located in the insertion portion 210, the position-limiting convex portion 320 includes a cylindrical portion 321 and a guide portion 322, one end of the cylindrical portion 321 is connected to the body 310, the guide portion 322 is connected to the other end of the cylindrical portion 321, and the guide portion 322 is used to fit with the hole wall of the first hole section 231 and guide the cylindrical portion 321 into the first hole section 231.

After being introduced, the cylindrical portion 321 can limit the position of the blocking member 300 and the electrode terminal 200 in the radial direction. By providing the guide portion 322 to guide the cylindrical portion 321 into the first hole section 231, it helps to improve the assembly efficiency of the blocking member 300. The guide portion 322 may be configured in a ball-head shape or a frustum shape, which is not limited here.

One end of the cylindrical portion 321 can be directly connected to the body 310, and one end of the cylindrical portion 321 can also be indirectly connected to the body 310.

According to some embodiments of the present application, optionally, as shown in Figs. 5 to 9, in the region where the cylindrical portion 321 and the first hole section 231 overlap in the axial direction, the difference between the minimum radial dimension D1 of the first hole section 231 and the maximum radial dimension D2 of the outer peripheral surface of the cylindrical portion 321 is less than or equal to 0.2 mm. For example, D1-D2 can be set to be less than or equal to 0.18 mm, 0.15 mm, 0.1 mm, 0.05 mm, etc.

The first hole section 231 and the cylindrical portion 321 can have a position-limiting function by fitting with each other. By setting the difference between the minimum radial dimension D1 of the first hole section 231 and the maximum radial dimension D2 of the outer peripheral surface of the cylindrical portion 321 to be less than or equal to 0.2 mm, the first hole section 231 and the cylindrical portion 321 can effectively limit the position of the blocking member 300 and the electrode terminal 200 in the radial direction, which alleviates the large relative offset or inclination of the blocking member 300 and the electrode terminal 200 in the radial direction, is beneficial to the connection and fixation between the blocking member 300 and the electrode terminal 200, and also beneficial to the connection and fixation between the blocking member 300 and external conductive components.

Optionally, D1-D2 can be set to be greater than or equal to 0.1 mm. By setting the lower limit of D1-D2, the assembly difficulty when the cylindrical portion 321 is inserted into the first hole section 231 can be reduced.

According to some embodiments of the present application, optionally, as shown in Figs. 5, 6, 8 and 9, the difference between the maximum radial dimension D6 of the flange portion 220 and the maximum radial dimension D5 of the body 310 is greater than the difference between the minimum radial dimension D1 of the first hole section 231 and the maximum radial dimension D2 of the outer peripheral surface of the cylindrical portion 321. For example, D6-D5 can be set to be at least 0.1 mm, 0.2 mm, 0.3 mm, and 0.5 mm larger than D1-D2.

Due to the existence of the assembly gap, the blocking member 300 and the electrode terminal 200 may be relatively offset in the radial direction, and the relative offset distance is smaller than the difference between the minimum radial dimension D1 of the first hole section 231 and the maximum radial direction D2 of the outer peripheral surface of the cylindrical portion 321. By setting the difference between the maximum radial dimension D6 of the flange portion 220 and the maximum radial dimension D5 of the body 310 to be greater than the difference between the minimum radial dimension D1 of the first hole section 231 and the maximum radial dimension D2 of the outer peripheral surface of the cylindrical portion 321, it can make the projection of the body 310 along the above-mentioned axial direction remain inside the flange portion 220 when the blocking member 300 and the electrode terminal 200 are relatively offset in the radial direction, which is beneficial to the connection and fixation between the blocking member 300 and the electrode terminal 200, and at the same time beneficial to the connection and fixation between the blocking member 300 and external conductive components.

According to some embodiments of the present application, optionally, as shown in Figs. 5, 6 and 9, the overlap length H1 between the minimum radial dimension D1 of the first hole section 231 and the maximum radial dimension D2 of the outer peripheral surface of the cylindrical portion 321 in the axial direction is greater than or equal to 0.2 mm. For example, H1 can be set to be 0.3 mm, 0.4 mm, 0.5 mm, 0.8 mm, etc.

After the cylindrical portion 321 is introduced into the first hole section 231, the cylindrical portion 321 and the first hole section 231 overlap in the axial direction. The cylindrical section 321 can abut against the inner wall of the first hole section 231, thereby limiting the position of the blocking member 300 and the electrode terminal 200. The longer the distance by which the cylindrical portion 321 abuts against the inner wall of the first hole section 231 in the axial direction, the more stable and reliable the position-limiting on the blocking member 300 and the electrode terminal 200 will be. By setting the overlap length H1 between the minimum radial dimension D1 of the first hole section 231 and the maximum radial dimension D2 of the outer peripheral surface of the cylindrical portion 321 in the axial direction to be greater than or equal to 0.2 mm, the reliability and stability of position-limiting on the blocking member 300 and the electrode terminal 200 can be improved.

Optionally, H1 can be set to be less than or equal to 2 mm. By setting the upper limit of H1, the cylindrical portion 321 can be introduced into the first hole section 231 more easily, thereby reducing assembly difficulty and improving assembly efficiency.

According to some embodiments of the present application, optionally, as shown in Figs. 4, 5 and 8, the recessed portion 230 includes a first hole section 231 and a second hole section 232, the first hole section 231 is located in the insertion portion 210, the second hole section 232 is connected to the first hole section 231 at the side of the first hole section 231 away from the inside of the shell 100, the second hole section 232 is a frustum hole, and the radial dimension D9 of the second hole section 232 gradually decreases in the direction towards the first hole section 231.

By configuring the second hole section 232 as a frustum hole, the second hole section 232 plays a guiding role similar to a "funnel", and the position-limiting convex portion 320 is guided by using the second hole section 232, which is conductive to improving the assembly efficiency of the blocking member 300.

According to some embodiments of the present application, optionally, as shown in Figs. 5 and 7 to 9, the recessed portion 230 further includes a third hole section 233. The third hole section 233 is located in the flange portion 220 and is connected between the side of the flange portion 220 away from the insertion portion 210 and the second hole section 232, and the radial dimension D4b of one end of the third hole section 233 towards the second hole section 232 is greater than the radial dimension D9a of one end of the second hole section 232 towards the third hole section 233, thereby forming a first annular mesa 234 at the connection between the second hole section 232 and the third hole section 233.

The first annular mesa 234 is formed at the connection between the second hole section 232 and the third hole section 233, which makes it easier to visually capture the recessed portion 230 and improves assembly efficiency. For example, after the electrode terminal 200 is fixed on the wall portion 101, it is often necessary to collect images of the recessed portion 230 and determine whether the size of the recessed portion 230 meets the preset standard through visual analysis. By providing the first annular mesa 234, a gradient change can be formed on the collected images, making it easier to capture the edge of the recessed portion 230.

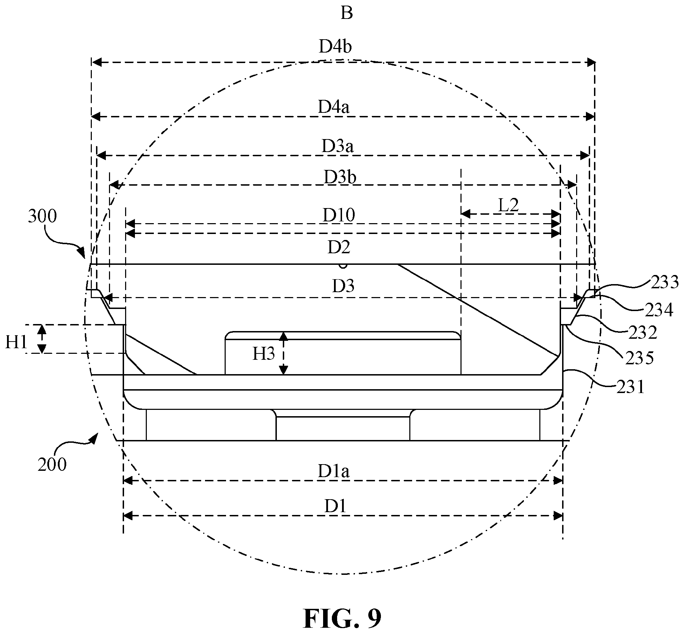

According to some embodiments of the present application, optionally, as shown in Figs. 6 and 9, the blocking member 300 further includes a transition portion 330 connected between the body 310 and the position-limiting convex portion 320, wherein the transition portion 330 is arranged in a frustum shape, the radial dimension D3 of the outer peripheral surface of the transition portion 330 gradually decreases in the direction from the body 310 to the position-limiting convex portion 320, the transition portion 330 is inserted into the second hole section 232 and the third hole section 233, and the difference between the radial dimension D4a of one end of the third hole section 233 towards the body 310 and the radial dimension D3a of one end of the transition portion 330 towards the body 310 is greater than or equal to 0.15 mm. For example, D4a-D3a can be set to be 0.2 mm, 0.3 mm, 0.4 mm, 0.5 mm, etc.

The radial dimension of the transition portion 330 can be larger than the radial dimension of the position-limiting convex portion 320. The transition portion 330 is provided to help to improve the connection strength between the body 310 and the position-limiting convex portion 320.

An inner chamfer 331 can be formed at the connection between the outer edge of the transition portion 330 and the body 310. The difference between the radial dimension D4a of one end of the third hole section 233 towards the body 310 and the radial dimension D3a of one end of the transition portion 330 towards the body 310 is set to be greater than or equal to 0.15 mm, so that the flange portion 220 and the inner chamfer 331 can form a distance in the radial direction, which can effectively alleviate the radial interference between the blocking member 300 and the electrode terminal 200 at the inner chamfer 331. The radial positioning effect of the blocking member 300 and the electrode terminal 200 can be improved through the fitting between the transition portion 330 and the second hole section 232, and at the same time the third hole section 233 is used to alleviate the interference of the inner chamfer 331 at the connection between the transition portion 330 and the body 310 with the flange portion 220, thereby improving the fitting effect between the body 310 and the flange portion 220.

Optionally, the inner chamfer 331 is arc-shaped.

Optionally, D4a-D3a can be set to be less than or equal to 0.5 mm. Setting the upper limit of D4a-D3a is beneficial to improving the connection strength between the flange portion 220 and the insertion portion 210.

According to some embodiments of the present application, optionally, the axial hole depth H4 of the third hole section 233 is greater than or equal to 0.1 mm. For example, H4 can be set to be 0.15 mm, 0.2 mm, 0.3 mm, 0.4 mm, etc.

By setting the axial hole depth H4 of the third hole section 233 to be greater than or equal to 0.1 mm, the flange portion 220 and the inner chamfer 331 can be spaced apart in the axial direction, which can effectively alleviate the interference of the inner chamfer 331 at the connection between the transition portion 330 and the body 310 with the flange portion 220, thereby improving the fitting effect between the body 310 and the flange portion 220.

Optionally, H4 may be set to be less than or equal to 0.4 mm. Setting the upper limit of H4 is beneficial to improving the connection strength between the flange portion 220 and the insertion portion 210.

According to some embodiments of the present application, optionally, the first hole section 231 and the third hole section 233 are respectively cylindrical holes.

The first hole section 231 and the third hole section 233 are respectively cylindrical holes, which facilitates the processing of the first hole section 231 and the second hole section 232 and improves the processing efficiency of the electrode terminal 200.

According to some embodiments of the present application, optionally, as shown in Figs. 5 and 7 to 9, the flange portion 220 is integrally formed with the insertion portion 210 and is bent relative to the insertion portion 210, and the radial dimension D1a of one end of the first hole section 231 towards the second hole section 232 is smaller than the radial dimension D9b of one end of the second hole section 232 towards the first hole section 231, thereby forming a second annular mesa 235 at the connection between the first hole section 231 and the second hole section 232.

In an embodiment, the flange portion 220 is originally a tubular structure connected to the insertion portion 210 with the same outer diameter, and is exposed to the outside of the wall portion 101 after the insertion portion 210 is inserted into the lead-out hole 102, and then the flange portion 220 is bent and formed relative to the insertion portion 210 by riveting or tube expansion.

For the same batch of blocking members 300, the flange portion 220 needs to be bent at a fixed position during the forming process, so that the bent and formed blocking members 300 maintain consistency. Providing the second annular mesa 235 can form a thickness difference on both sides of the second annular mesa 235 of the blocking member 300, thereby improving the bendability of the blocking member 300 at the side of the second annular mesa 235 towards the flange portion 220. This facilitates the bending and forming of the flange portion 220 relative to the insertion portion 210 and improves the controllability of the bending process of the blocking member 300.

According to some embodiments of the present application, optionally, as shown in Figs. 5 and 7, the ratio of the radial width L4 of the second annular mesa 235 to the wall width T4 of the insertion portion 210 at the side of the second annular mesa 235 away from the flange portion 220 is greater than 0 and less than or equal to 7/8. For example, L4/T4 can be set to be 1/8, 1/6, 1/4, 1/2, 3/4, etc.

By setting the ratio of the radial width L4 of the second annular mesa 235 to the wall thickness T4 of the insertion portion 210 at the side of the second annular mesa 235 away from the flange portion 220 to be greater than 0, the bendability of the blocking member 300 at the side of the second annular mesa 235 towards the flange portion 220 is improved, which facilitates the bending and forming of the flange portion 220 relative to the insertion portion 210.

By setting the ratio of the radial width L4 of the second annular mesa 235 to the wall thickness T4 of the insertion portion 210 at the side of the second annular mesa 235 away from the flange portion 220 to be less than or equal to 7/8, sufficient connection strength can be maintained between the flange portion 220 and the insertion portion 210 and the flange portion 220 has sufficient wall thickness so that no mechanical failure occurs after bending.

According to some embodiments of the present application, optionally, as shown in Figs. 5 and 7, the ratio of the radial width L4 of the second annular mesa 235 to the wall width T4 of the insertion portion 210 at the side of the second annular mesa 235 away from the flange portion 220 is greater than 0 and less than or equal to 1/2. For example, L4/T4 can be set to be 1/8, 1/6, 1/4.

By setting the ratio of the radial width L4 of the second annular mesa 235 to the wall thickness T4 of the insertion portion 210 at the side of the second annular mesa 235 away from the flange portion 220 to be greater than 0, the bendability of the blocking member 300 at the side of the second annular mesa 235 towards the flange portion 220 can be improved, which facilitates the bending and forming of the flange portion 220 relative to the insertion portion 210.

By setting the ratio of the radial width L4 of the second annular mesa 235 to the wall thickness T4 of the insertion portion 210 at the side of the second annular mesa 235 away from the flange portion 220 to be less than or equal to 1/2, sufficient connection strength can be maintained between the flange portion 220 and the insertion portion 210, so that no mechanical failure occurs after bending.

Optionally, L4/T4 can be set to be greater than or equal to 1/8. By setting the lower limit of L4/T4, the bendability of the blocking member 300 at the side of the second annular mesa 235 towards the flange portion 220 can be further improved.

According to some embodiments of the present application, optionally, as shown in Figs. 5 and 7, the wall thickness L1 of the flange portion 220 and/or the insertion portion 210 at the side of the second annular mesa 235 towards the flange portion 220 is less than the wall thickness T4 of the insertion portion 210 at the side of the second annular mesa 235 away from the flange portion 220.

On the one hand, by providing the second annular mesa 235, the wall thickness L1 of the flange portion 220 and/or the insertion portion 210 at the side of the second annular mesa 235 towards the flange portion 220 is smaller than the wall thickness T4 of the insertion portion 210 at the side of the second annular mesa 235 away from the flange portion 220, which facilitates bending at the second annular mesa 235. On the other hand, during the bending process, the wall thickness L1 of the flange portion 220 and/or the insertion portion 210 at the side of the second annular mesa 235 towards the flange portion 220 is relatively thin, making it easier to extend and deform, which facilitates the processing and forming of the flange portion 220. For example, L1/T4 can be set in the same way as L4/T4 described above.

According to some embodiments of the present application, optionally, as shown in Figs. 6 and 9, the radial dimension D3b of one end of the transition portion 330 towards the position-limiting convex portion 320 is larger than the radial dimension D10 of one end of the position-limiting convex portion 320 towards the transition portion 330, thereby forming a third annular mesa 340 at the connection between the transition portion 330 and the position-limiting convex portion 320. The third annular mesa 340 is arranged opposite to the second annular mesa 235 and they are spaced apart from each other in the axial direction.

By providing the third annular mesa 340 and the second annular mesa 235 and arranging them to be spaced apart from each other in the axial direction, interference between the blocking member 300 and the electrode terminal 200 during the assembly process can be alleviated, which is beneficial to improving assembly efficiency.

Furthermore, the transition portion 330 and the second hole section 232 partially overlap in the axial direction, and the transition portion 330 and the second hole section 232 fit with each other to limit the position of the blocking member 300 and the electrode terminal 200 in the radial direction.

According to some embodiments of the present application, optionally, as shown in Figs. 6 and 9, the position-limiting convex portion 320 includes a cylindrical portion 321, an avoidance hole 323 is provided at the side of the position-limiting convex portion 320 towards the inside of the shell 100, the avoidance hole 323 extends into the cylindrical portion 321 in the axial direction, and the ratio of the wall thickness L2 of the cylindrical portion 321 at the avoidance hole 323 to the axial hole depth H3 of the avoidance hole 323 is greater than or equal to 1/2 and less than or equal to 3. For example, L2/H3 can be set to be 0.6, 0.7, 0.8, 1.0, 1.5, 2.0, 2.5, etc.

The battery cell 1 may include a sealing plug 600. The sealing plug 600 can protrude in the recessed portion 230 towards the position-limiting convex portion 320, and the sealing plug 600 can be partially accommodated in the avoidance hole 323. The avoidance hole 323 is provided to alleviate the interference between the position-limiting convex portion 320 and the sealing plug 600.

By setting the ratio between the wall thickness L2 of the cylindrical portion 321 at the avoidance hole 323 and the axial hole depth H3 of the avoidance hole 323 to be greater than or equal to 1/2, the position-limiting convex portion 320 can have sufficient mechanical strength at the hole wall of the avoidance hole 323, so that the position-limiting convex portion 320 and the recessed portion 230 are not deformed when they abut against each other for position-limiting, thereby improving the position-limiting effect of the position-limiting convex portion 320.

Optionally, the sealing plug 600 is made of an elastic polymer material, such as silicone, rubber.

By setting the ratio of the wall thickness L2 of the cylindrical portion 321 at the avoidance hole 323 to the axial hole depth H3 of the avoidance hole 323 to be less than or equal to 3, the avoidance hole 323 can be made to have sufficient accommodation depth to alleviate the interference between the position-limiting convex portion 320 and the sealing plug 600.

Optionally, L2/H3 may be set to be greater than or equal to 1.0 and less than or equal to 2.5. By setting L2/H3 within the above numerical range, in addition to achieving the above beneficial effects, it also facilitates the processing and forming of the blocking member 300.

According to some embodiments of the present application, optionally, as shown in Fig. 3, the recessed portion 230 is used to inject the electrolyte into the inside of the shell 100.

By providing the recessed portion 230, after the electrode terminal 200 and the shell 100 are assembled and connected, the electrolyte can be injected using the recessed portion 230, and then it is blocked using the blocking member 300, which can simplify the structural complexity of the battery cell 1, reduce the leakage of the electrolyte in the assembly process, and improve the assembly efficiency of the battery cell 1.

According to some embodiments of the present application, optionally, as shown in Figs. 3 and 4, the electrode terminal 200 is also provided with a liquid injection hole 240. The liquid injection hole 240 is provided at the bottom of the recessed portion 230 and communicates the inside of the shell 100 with the recessed portion 230.

The liquid injection hole 240 can be communicated with the inside of the shell 100. When the electrolyte is injected, the electrolyte can flow through the recessed portion 230 and the liquid injection hole 240 in sequence and then enter the inside of the shell 100. The liquid injection hole 240 is provided to facilitate sealing after the electrolyte injection is completed. By arranging the liquid injection hole 240 in the thinner region at the bottom of the recessed portion 230, the formation of the liquid injection hole 240 and the injection of the electrolyte are facilitated.

Specifically, the battery cell 1 may include a sealing plug 600. The sealing plug 600 may include a sealing portion 601 and a position-limiting portion 602 that are connected, and the sealing portion 601 may be disposed in the liquid injection hole 240 to seal the liquid injection hole 240. The position-limiting portion 602 can protrude in the recessed portion 230 towards the position-limiting convex portion 320, for holding or clamping during assembly on the one hand, and for restricting the sealing portion 601 from entering the inside of the shell 100. After the electrolyte injection is completed, the liquid injection hole 240 can be sealed by the sealing plug 600.

According to some embodiments of the present application, optionally, as shown in Fig. 3, the battery cell 1 further includes a current collector 400 and an electrode assembly 500 disposed inside the shell 100. The current collector 400 is configured to connect the tabs 501 of the electrode assembly 500 and the electrode terminals 200, and the bottom wall 113 of the recessed portion 230 is welded to the current collector 400.

The current collector 400 can be disposed between the electrode terminal 200 and the electrode assembly 500, and has the function of forming a current path between the electrode terminal 200 and the electrode assembly 500. By providing the current collector 400, the electrical connection between the electrode terminal 200 and the electrode assembly 500 is facilitated. The thin thickness of the bottom of the recessed portion 230 is utilized for welding with the current collector 400, thereby facilitating the electrical connection between the electrode terminal 200 and the current collector 400 from the side of the electrode terminal 200 away from the current collector 400.

According to some embodiments of the present application, optionally, as shown in Figs. 3 and 6, the shell 100 includes a case 110 and an end cover 120, one end of the case 110 has an opening 111, the end cover 120 covers the opening 111, the case 110 includes side walls 112 and a bottom wall 113, the side walls 112 surround the outside of the electrode assembly 500, and the bottom wall 113 is arranged opposite to the opening 111.

In the above embodiment, the wall portion 101 is the bottom wall 113. In other embodiments, the wall portion 101 can also be the end cover 120.

Since the end cover 120 or the bottom wall 113 is flatter than the side wall 112, by arranging the electrode terminal 200 and the blocking member 300 on the end cover 120 or the bottom wall 113, the assembly efficiency of the battery cell 1 can be improved.

According to some embodiments of the present application, as shown in Fig. 2, the battery 100a includes the above-mentioned battery cell 1. Such an arrangement can improve the stability and reliability of the battery cell 1 during operation by improving the connection effect between the electrode assembly 500 and the outside, thereby improving the stability and reliability of the battery 100a during operation.

According to some embodiments of the present application, as shown in Fig. 1, the electrical apparatus includes the above-mentioned battery 100a. Such an arrangement can improve the stability and reliability of the battery 100a during operation by improving the stability and reliability of the battery cell 1 during operation, thereby improving the stability and reliability of the electrical apparatus during operation.

According to some embodiments of the present application, optionally, as shown in Figs. 3 to 9, the maximum radial dimension D5 of the body 310 is less than or equal to the maximum radial dimension D6 of the flange portion 220. The weld region 312 is recessed towards the inside of the shell 100 relative to the central region 311, and the recess depth T1 of the weld region 312 relative to the central region 311 is greater than or equal to 0.1 mm. In the radial direction, the radial width T5 of the weld region 312 is greater than or equal to 0.5 mm. The ratio of the axial thickness T2 of the body 310 in the weld region 312 to the axial thickness T3 of the region of the flange portion 220 covered by the weld region 312 is greater than or equal to 1/8 and less than or equal to 1. In the region where the cylindrical portion 321 and the first hole sections 231 overlap in the axial direction, the difference between the minimum radial dimension D1 of the first hole section 231 and the maximum radial dimension D2 of the outer peripheral surface of the cylindrical portion 321 is less than or equal to 0.2 mm. The overlap length H1 between the minimum radial dimension D1 of the first hole section 231 and the maximum radial dimension D2 of the outer peripheral surface of the cylindrical portion 321 in the axial direction is greater than or equal to 0.2 mm. The blocking member 300 further includes a transition portion 330 connected between the body 310 and the position-limiting convex portion 320, wherein the transition portion 330 is arranged in a frustum shape, the radial dimension D3 of the outer peripheral surface of the transition portion 330 gradually decreases in the direction from the body 310 to the position-limiting convex portion 320, the transition portion 330 is inserted into the second hole section 232 and the third hole section 233, and the difference between the radial dimension D4a of one end of the third hole section 233 towards the body 310 and the radial dimension D3a of one end of the transition portion 330 towards the body 310 is greater than or equal to 0.15 mm. The axial hole depth H4 of the third hole section 233 is greater than or equal to 0.1 mm. The flange portion 220 is integrally formed with the insertion portion 210 and is bent relative to the insertion portion 210. The radial dimension D1a of one end of the first hole section 231 towards the second hole section 232 is smaller than the radial dimension D9b of one end of the second hole section 232 towards the first hole section 231, thereby forming a second annular mesa 235 at the connection between the first hole section 231 and the second hole section 232; the ratio of the radial width L4 of the second annular mesa 235 to the wall thickness T4 of the insertion portion 210 at the side of the second annular mesa 235 away from the flange portion 220 is greater than 0 and less than or equal to 7/8. The radial dimension D3b of one end of the transition portion 330 towards the position-limiting convex portion 320 is larger than the radial dimension D10 of one end of the position-limiting convex portion 320 towards the transition portion 330, thereby forming a third annular mesa 340 at the connection between the transition portion 330 and the position-limiting convex portion 320. The third annular mesa 340 is arranged opposite to the second annular mesa 235 and they are spaced apart from each other in the axial direction. The position-limiting convex portion 320 includes a cylindrical portion 321, an avoidance hole 323 is provided at the side of the position-limiting convex portion 320 towards the inside of the shell 100, the avoidance hole 323 extends into the cylindrical portion 321 in the axial direction, and the ratio of the wall thickness L2 of the cylindrical portion 321 at the avoidance hole 323 to the axial hole depth H3 of the avoidance hole 323 is greater than or equal to 1/2 and less than or equal to 3. Such an arrangement can facilitate welding, improve assembly efficiency, improve the mechanical strength after welding, and enhance the connection effect.

In summary, the embodiments of the present application can increase the area of the body 310 perpendicular to its own axis, expand the connectable region of the blocking member 300, facilitate the connection of the blocking member 300 with both the electrode terminal 200 and the outside, and can improve the connection effect of the blocking member 300.

Finally, it should be noted that the above embodiments are merely used for illustrating rather than limiting the technical solutions of the present application. Although the present application has been described in detail with reference to the above various embodiments, those of ordinary skill in the art should understand that the technical solutions specified in the above various embodiments may still be modified, or some or all of the technical features therein may be equivalently substituted; and such modifications or substitutions do not make the essence of the corresponding technical solutions depart from the scope of the technical solutions of the various embodiments of the present application, which shall fall within the scope of the claims and the specification of the present application. In particular, the technical features mentioned in the various embodiments can be combined in any manner as long as there is no structural conflict. The present application is not limited to the specific embodiments disclosed herein, but rather includes all technical solutions falling within the scope of the claims.

## Claims

1. A battery cell, comprising:
a shell, wherein the shell includes a wall portion having a lead-out hole;
an electrode terminal, wherein the electrode terminal includes an insertion portion and a flange portion connected to each other in an axial direction of the electrode terminal, the insertion portion is provided in the lead-out hole, the flange portion is located at the side of the insertion portion away from the inside of the shell, and in a radial direction of the electrode terminal, an outer peripheral surface of the flange portion is at least partially beyond an outer peripheral surface of the insertion portion, and the electrode terminal has a recessed portion provided in the axial direction;
a blocking member, wherein the blocking member is used to block the recessed portion, the blocking member includes a body, the body covers the side of the flange portion away from the insertion portion and is fixedly connected to the flange portion, and the battery cell is electrically connected to the outside through the blocking member.

2. The battery cell according to claim 1, wherein an outer end surface of the body away from the flange portion includes a central region and a weld region arranged around the central region, the central region is configured to be connected to external conductive components, and the weld region is configured to be welded onto the flange portion.

3. The battery cell according to claim 2, wherein the weld region is recessed towards the inside of the shell relative to the central region.

4. The battery cell according to claim 3, wherein in the axial direction, the recess depth of the weld region relative to the central region is greater than or equal to 0.1 mm.

5. The battery cell according to any one of claims 2-4, wherein in the radial direction, the radial width of the weld region is greater than or equal to 0.5 mm.

6. The battery cell according to any one of claims 2-5, wherein the ratio of the axial thickness of the body in the weld region to the axial thickness of the region of the flange portion covered by the weld region is greater than or equal to 1/8 and less than or equal to 1.

7. The battery cell according to any one of claims 2-6, wherein the maximum radial dimension of the body is less than or equal to the maximum radial dimension of the flange portion.

8. The battery cell according to any one of claims 1-7, wherein the blocking member includes a position-limiting convex portion connected to the body in the axial direction, and the position-limiting convex portion is inserted into the recessed portion.

9. The battery cell according to claim 8, wherein the recessed portion includes a first hole section located in the insertion portion, the position-limiting convex portion includes a cylindrical portion and a guide portion, one end of the cylindrical portion is connected to the body, the guide portion is connected to the other end of the cylindrical portion, the guide portion is used to fit with an hole wall of the first hole section and guide the cylindrical portion into the first hole section.

10. The battery cell according to claim 9, wherein in the region where the cylindrical portion and the first hole section overlap in the axial direction, the difference between the minimum radial dimension of the first hole section and the maximum radial dimension of the outer peripheral surface of the cylindrical portion is less than or equal to 0.2 mm.

11. The battery cell according to claim 9 or 10, wherein the difference between the maximum radial dimension of the flange portion and the maximum radial dimension of the body is greater than the difference between the minimum radial dimension of the first hole section and the maximum radial dimension of the outer peripheral surface of the cylindrical portion.

12. The battery cell according to any one of claims 9-11, wherein the overlap length between the minimum radial dimension of the first hole section and the maximum radial dimension of the outer peripheral surface of the cylindrical portion in the axial direction is greater than or equal to 0.2 mm.

13. The battery cell according to any one of claims 8-12, wherein the recessed portion includes a first hole section and a second hole section, the first hole section is located in the insertion portion, the second hole section is connected to the first hole section at the side of the first hole section away from the inside of the shell, the second hole section is a frustum hole, and the radial dimension of the second hole section gradually decreases in the direction towards the first hole section.

14. The battery cell according to claim 13, wherein the recessed portion further includes a third hole section, the third hole section is located in the flange portion and is connected between the side of the flange portion away from the insertion portion and the second hole section, the radial dimension of one end of the third hole section towards the second hole section is greater than the radial dimension of one end of the second hole section towards the third hole section, thereby forming a first annular mesa at the connection between the second hole section and the third hole section.

15. The battery cell according to claim 14, wherein the blocking member further includes a transition portion connected between the body and the position-limiting convex portion, the transition portion is arranged in a frustum shape, the radial dimension of the outer peripheral surface of the transition portion gradually decreases in the direction from the body to the position-limiting convex portion, the transition portion is inserted into the second hole section and the third hole section, and the difference between the radial dimension of one end of the third hole section towards the body and the radial dimension of one end of the transition portion towards the body is greater than or equal to 0.15 mm.

16. The battery cell according to claim 15, wherein the axial hole depth of the third hole section is greater than or equal to 0.1 mm.

17. The battery cell according to any one of claims 14-16, wherein the first hole section and the third hole section are cylindrical holes, respectively.

18. The battery cell according to any one of claims 13-17, wherein the flange portion is integrally formed with the insertion portion and is bent relative to the insertion portion, the radial dimension of one end of the first hole section towards the second hole section is smaller than the radial dimension of one end of the second hole section towards the first hole section, thereby forming a second annular mesa at the connection between the first hole section and the second hole section.

19. The battery cell according to claim 18, wherein the ratio of the radial width of the second annular mesa to the wall thickness of the insertion portion at the side of the second annular mesa away from the flange portion is greater than 0 and less than or equal to 7/8.

20. The battery cell according to claim 18, wherein the ratio of the radial width of the second annular mesa to the wall thickness of the insertion portion at the side of the second annular mesa away from the flange portion is greater than 0 and less than or equal to 1/2.

21. The battery cell according to claim 18, wherein the wall thickness of the flange portion and/or the insertion portion at the side of the second annular mesa towards the flange portion is smaller than the wall thickness of the insertion portion at the side of the second annular mesa away from the flange portion.

22. The battery cell according to any one of claims 13-21, wherein the radial dimension of one end of the first hole section towards the second hole section is smaller than the radial dimension of one end of the second hole section towards the first hole section, thereby forming a second annular mesa at the connection between the first hole section and the second hole section; the blocking member further includes a transition portion connected between the body and the position-limiting convex portion, the radial dimension of one end of the transition portion towards the position-limiting convex portion is greater than the radial dimension of one end of the position-limiting convex portion towards the transition portion, thereby forming a third annular mesa at the connection between the transition portion and the position-limiting convex portion, and the third annular mesa and the second annular mesa are arranged oppositely and spaced apart from each other in the axial direction.

23. The battery cell according to any one of claims 8-22, wherein the position-limiting convex portion includes a cylindrical portion, an avoidance hole is provided at the side of the position-limiting convex portion towards the inside of the shell, the avoidance hole extends into the cylindrical portion in the axial direction, and the ratio of the wall thickness of the cylindrical portion at the avoidance hole to the axial hole depth of the avoidance hole is greater than or equal to 1/2 and less than or equal to 3.

24. The battery cell according to any one of claims 1-23, wherein the recessed portion is used for injecting an electrolyte into the inside of the shell.

25. The battery cell according to claim 24, wherein the electrode terminal is further provided with a liquid injection hole, the liquid injection hole is provided at the bottom of the recessed portion and communicates the inside of the shell with the recessed portion.

26. The battery cell according to any one of claims 1-25, wherein the battery cell further includes a current collector and an electrode assembly arranged inside the shell, the current collector is configured to connect the tabs of the electrode assembly and the electrode terminals, and the bottom wall of the recessed portion is welded to the current collector.

27. The battery cell according to any one of claims 1-26, wherein the shell includes a case and an end cover, one end of the case has an opening, the end cover covers the opening, the case includes side walls and a bottom wall, the side walls surround the outside of the electrode assembly, the bottom wall is arranged opposite to the opening, and the wall portion is the end cover or the bottom wall.

28. A battery, comprising the battery cell according to any one of claims 1-27.

29. An electrical apparatus, wherein the electrical apparatus comprises the battery according to claim 28.
